## Europäisches Patentamt
## European Patent Office
## Office européen des brevets

(19)

(11) Publication number: **0 287 688**
**B1**

(12) # EUROPEAN PATENT SPECIFICATION

(45) Date of publication of the patent specification:
22.08.90

(51) Int. Cl.⁵: **B26D 7/30, A22C 25/18**

(21) Application number: 87105778.2

(22) Date of filing: 18.04.87

(54) **Apparatus for cutting meat or fish.**

(43) Date of publication of application:
26.10.88 Bulletin 88/43

(45) Publication of the grant of the patent:
22.08.90 Bulletin 90/34

(84) Designated Contracting States:
BE CH DE FR GB IT LI SE

(56) References cited:
EP-A- 0 235 322
DE-A- 1 432 518
FR-A- 2 572 004
GB-A- 2 149 650
US-A- 4 557 019

(73) Proprietor: FRISCO-FINDUS AG, Industriestrasse,
CH-9400 Rorschach(CH)

(72) Inventor: Akesson, Yngve Reinhold, 37,
Bankogardsgatan, Halsingborg(SE)
Inventor: Hansson, Nils Erik, Kaprifolgatan 19,
267 00 Bjuv(SE)
Inventor: Olofsson, Mats, Langgatan 10,
265 00 Astorp(SE)

## Description

The present invention relates to an apparatus and a process for the automatic cutting of meat or fish to produce portions of a predetermined weight and length.

In the production of packaged frozen meat or fish products, it is important that the weight of the portions is controlled as accurately as possible, otherwise the weights will vary at the time of filling the packages resulting in certain disadvantages: underweight portions of incorrect weight have to be rejected leading to significant losses of fish or meat material while overweight portions have to be adjusted to the correct weight, which increases the costs.

The most reliable way of ensuring a constant weight is by cutting and weighing the portions manually. However, this is labour intensive and very time-consuming. Mechanical means for automatic and semi-automatic cutting and weighing of portions have been described but these generally involve the use of very complex machinery. For example, the use of photoelectric sensors has been proposed to detect the linear measurements of fish but since not only the length, but also the breadth and thickness vary appreciably, this method would not lead to the cutting of portions with an accurate constant weight. GB-A 2 149 650 and US-A 4 557 019 each describe an apparatus for cutting a product into portions of a preselected weight which makes of optical sensors for measuring the area and shape respectively of the product.

In our co-pending European Patent Application EP-A 0 235 322 published on 9.9.87 and falling under the term of Article 54.3), we have described and claimed an apparatus and process for the automatic cutting of meat or fish material to produce portions of a predetermined constant weight, comprising a pair of adjacent parallel conveyors suitable for transporting a meat or fish material lying partly on each conveyor, a weighing machine and a movable cutting device wherein the parallel conveyors are adapted to travel in the same direction at substantially the same speed and that at least part of one of the parallel conveyors is adapted to form the load-bearing platform of the weighing machine, the weighing machine being adapted to weigh the material on the load-bearing platform and the cutting device being adapted to move transversely relative to the direction of movement of the conveyors, the direction and distance of the transverse movement being controlled by the weight recorded on the weighing machine, and then to cut the material parallel to the direction of movement.

We have now developed an improvement to this apparatus and method which, surprisingly, enables fish and meat pieces having widely varying thicknesses to be cut automatically at a high speed to a predetermined weight and length and which may be graded in size groups.

The present invention provides a process for the automatic cutting of meat or fish material by a fixed or movable cutting device to produce portions of a predetermined weight and length which comprises placing a meat or fish material onto the infeed end of a pair of adjacent parallel conveyors travelling in the same direction substantially at the same speed so that the material lies partly on each conveyor, at least part of one conveyor being adapted to form the load-bearing platforms of a plurality of weighing machines positioned successively, each succeeding weighing machine being offset laterally to a degree corresponding to the desired length of the portions of the material which lie on the load-bearing platform and being preprogrammed for a certain weight according to the said desired length, the cutting device being positioned downstream of the downstream weighing machine, the weighing machines record the weight of the material advancing on the load-bearing platform, the recorded weight measurement is fed to a control device which actuates either the cutting device, when movable, to move transversely to the direction of movement of the conveyor or, when the cutting device is fixed, a means positioned downstream of the weighing machine to cause the material to move transversely relative to the longitudinal direction of movement of the parallel conveyors, the direction and distance of the transverse movement of the cutting device or the means for causing the material to move transversely being controlled by the weight recorded compared with the preprogrammed weight with respect to a particular weighing machine, after which the material is cut by the cutting device in a direction parallel to the longitudinal direction of movement of the parallel conveyors.

Afterwards the cut pieces may be graded in length and weight groups by a means actuated by a control device which receives a signal from the weighing machine which records the weight and separates the cut pieces in size groups.

The meat or fish material is conveniently placed on infeed conveyor upstream of the adjacent parallel conveyors manually so that the desired approximate weight of that part of the material which will form the portion having a predetermined weight lies substantially on the conveyor adapted to form the load-bearing platforms of the respective weighing machines, conveniently by ensuring that the material contacts an adjustable guide bar.

In addition the present invention provides an apparatus for carrying out the above-mentioned process comprising a pair of adjacent parallel conveyors suitable for transporting a meat or fish material lying partly on each conveyor, a plurality of weighing machines positioned successively, a control device and a fixed or movable cutting device wherein the parallel conveyors are adapted to travel in the same direction at substantially the same speed and that at least part of one of the parallel conveyors is adapted to form the load-bearing platforms of the weighing machines, each succeeding weighing machine being offset laterally to a degree corresponding to the desired length of the portions of the material which lie on the load-bearing platform and being preprogrammed for a certain weight according to the said desired length, and adapted to weigh the material lying on the load-bearing platform, the cutting device being positioned downstream of the downstream weighing machine, and when movable being adapted to move transversely to the direction of movement of the conveyors, and when fixed there being provided means, positioned between the downstream weighing machine and the cutting device, for causing the material to move transversely relative to the longitudinal direction of movement, the direction and distance of the transverse movement of the cutting device or the means for causing the material to move transversely being controlled by the actual weight recorded compared with the preprogrammed weight with respect to a particular weighing machine, the cutting device being adapted to cut the material parallel to the longitudinal direction of movement of the conveyors.

The parallel conveyors conveniently comprise endless belts. The parallel conveyor which is adapted to form the load-bearing platforms of the weighing machines conveniently comprises a plurality of endless belts each of which is conveniently fixed to a respective weighing machine via the axles of the rollers. Since the weighing machines are offset laterally, the parallel conveyors adapted to form the load-bearing platforms of the weighing machines are also conveniently offset laterally.

The adjacent parallel conveyors are preferably separated by a short distance so that there is a gap between them. The presence of this gap helps to eliminate the weight influence caused by any vertical or horizontal change of distance, or any speed difference between the two conveyors. The product has a natural elasticity and the elastic zone of the product in the gap between the two conveyors helps to eliminate this weight influence. The width of the gap depends on how much the parallel conveyor adapted to form the load-bearing platform of the respective weighing machines is offset. Generally, the width of the gap may vary from about 10 to 100 mm. In order to reduce the weight of these gaps, a rope conveyor is conveniently placed between the offset parallel conveyors and the adjacent parallel conveyor not adapted to form the load-bearing platforms of weighing machines. The gap may be narrowest or widest at either the upstream or the downstream end or intermediate depending on how the weighing machines are offset. However, the width of the gap depends a great deal on how precisely the mechanical construction of the weighing system has been effected and, narrower gaps are possible with a very precisely manufactured unit.

The means for causing the material to move transversely relative to the longitudinal direction of movement may be a conveyor adapted to travel longitudinally and also adapted to move transversely relative to the longitudinal direction of movement. The conveyor adapted to move transversely, may conveniently be provided by a single endless conveyor belt capable of travelling longitudinally but also provided with means to move transversely in either direction, which may be achieved by a step-motor. The means for causing the cutting device to move transversely may also be achieved by a step-motor. Although any kind of cutting device may be used, for example, jet cutting, a circular saw is preferred.

The weighing machines are conveniently of the the consisting of continuously working scales based on load cells, or they may be spring balances. We have found, surprisingly, that the weighing machines give a reliable reading of the weight of that part of the meat or fish material on the load-bearing platform. Because the weighing machines are offset, a different length of the fish or meat material comes to lie on each weighing machine and each particular weighing machine is preprogrammed for a certain weight according to the length of the material. It should be understood that the preprogrammed weight is a range, for example, spanning about 5% on either side of the desired weight. The control device is also conveniently preprogrammed for a certain range of lengths e.g. also about 5% above or below the desired length, and also for the combination of weight and length parameters. The weight recorded by a particular weighing machine is fed to the control device which may be a computer and, based on how the actual weight compares with the preprogrammed weight of a particular weighing machine, on the preprogrammed length, and on the preprogrammed combination of weight and length parameters, the cutting device or the means for causing the meat or fish material to move transversely is actuated so that either the cutting device or the meat or fish material travels an appropriate distance in the direction required so that the size closest to the desired weight and length may be cut by the cutting device.

There are two major advantages for having a plurality of weighing machines which are offset. One is that the subsequent weighing machines are offset to different degrees giving the possibility to obtain portions of different weight and length at the same time. The second major advantage is that the cut pieces of material may automatically be graded in length and weight groups because the length varies depending on which preprogrammed weighing machine the material is weighed, and a signal can be fed to a control device which actuates means for separating the cut pieces in size groups. The number of offset weighing machines may conveniently be from from 2 to 8, preferably from 3 to 6.

The present invention is applicable to meat and fish materials of all sizes and shapes, for example cod or salmon. The invention is particularly suitable for cutting cod tails having a weight between about 60 g to 175 g, but is also applicable for cutting fillets weighing up to 700 g.

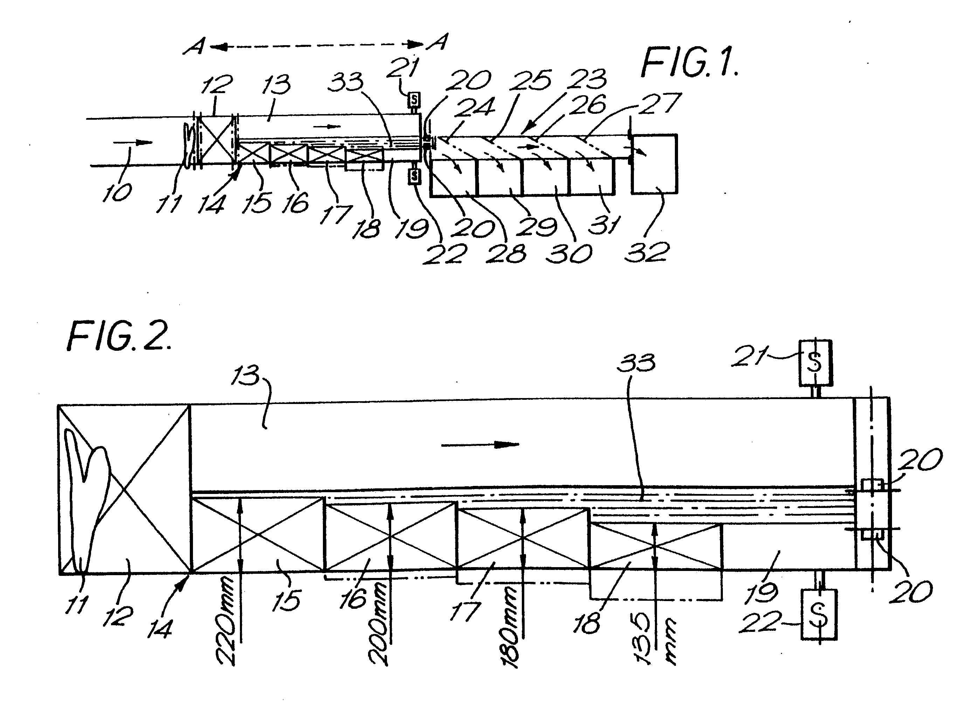

The present invention will now be illustrated by way of example with reference to the accompanying drawing in which Figure 1 represents a diagrammatic top plan view of an apparatus having four offset weighing machines and Figure 2 is an enlarged version of the part designated A–A in Figure 1.

Referring to the drawings, the apparatus comprises an infeed conveyor 10 on which rests a fillet of cod 11, a check weighing machine 12, parallel conveyors 13 and 14, parallel conveyor 14 consisting of 5 separate conveyor belts 15, 16, 17, 18 and 19, of which belts 15, 16, 17 and 18 form the load-bearing platforms of weighing machines offset laterally from one another. Downstream of the weighing machines are two movable cutting knives 20 activated by step motors 21 and 22. Downstream of the cutting knives is a further conveyor belt 23 provided with gates 24, 25, 26, 27 actuated by a control device (not shown) and below each of which is a container 28, 29, 30 and 31 respectively and at the downstream end of the belt 23 is a further container 32. The gap between conveyor belt 13 and conveyor belts 16, 17, 18 and 19 is filled out with roped conveyor 33.

In operation, fillets of cod 11 are placed manually on to the infeed conveyor belt 10 and positioned so that the tail ends contact an adjustable guide bar (not shown) located above the edge of the infeed conveyor belt 10 at its right hand side relative to the direction of motion indicated by the arrow. The fillets of cod pass in the direction of the arrow over the check weighing machine 12 which records the entire weight of the fillet and which can prevent the cutting of a large tail from a small fillet by passing a signal to the control device which can block the access to some of the offset weighing machines, if necessary. The cod fillets 11 then advance along the load-bearing platforms of conveyor belts 15, 16, 17 and 18. As can be seen from the drawings, in view of the positioning of the cod fillets on the infeed belt and because the belts 15, 16, 17 and 18 are offset laterally, while the whole width of belt 15 is covered by portions of cod fillets, successively less of the width of belts 16, 17 and 18 are covered and therefore the length of cod fillets on each succeeding belt is progressively less. In Figure 2, the width of each of the belts 15, 16, 17 and 18 is 220 mm, the length of the portion of cod fillet on belt 15 is 220 mm, the length on belt 16 is 200 mm, the length on belt 17 is 180 mm and the length on belt 18 is 135 mm. The preprogrammed weights desired are 150 g, 125 g, 105 g and 80 g on belts 15, 16, 17 and 18 respectively. When the recorded weight of the tail lying on one of the weighing machines corresponds to the preprogrammed weight according to its length, this weight measurement is fed to a control device (not shown) which actuates the step motor 21 or 22 to cause one of cutting knives 20 to move transversely to the longitudinal direction of movement of the fillet until it is in the appropriate position of cutting the advancing cod fillet. In addition, a signal from the weighing machine which records the desired weight is sent to a control device which actuates the appropriate gate (24, 25, 26 or 27) to close so causing the cut cod tail to fall into the appropriate contained (28, 29, 30 or 31). In this way the cut cod tails are graded according to their weights and lengths. If the tail of the fillet does not fall within the preprogrammed values for weight according to length, the tail will not be cut off from the fillet and will be collected in container 32.

## Claims

1. A process for the automatic cutting of meat or fish material (11) by a fixed or movable cutting device (20) to produce portions of a predetermined weight and length which comprises placing a meat or fish material (11) onto the infeed end (10) of a pair of adjacent parallel conveyors (13, 14) travelling in the same direction substantially at the same speed so that the material lies partly on each conveyor, at least part of one conveyor (14) being adapted to from the load-bearing platforms (15, 16, 17, 18) of a plurality of weighing machines positioned successively, each succeeding weighing machine being offset laterally to a degree corresponding to the desired length of the portions of the material (11) which lie on the load-bearing platform and being preprogrammed for a certain weight according to the said desired length, the cutting device (20) being positioned downstream of the downstream weighing machine (18) the weighing machines record the weight of the material (11) advancing on the load-bearing platform, the recorded weight measurement is fed to a control device which actuates either the cutting device (20), when movable, to move transversely to the direction of movement of the conveyor or, when the cutting device (20) is fixed, a means positioned downstream of the weighing machine (18) to cause the material (11) to move transversely relative to the longitudinal direction of movement of the parallel conveyors (13, 14), the direction and distance of the transverse movement of the cutting device (20) or the means for causing the material (11) to move transversely being controlled by the weight recorded compared with the preprogrammed weight with respect to a particular weighing machine, after which the material (11) is cut by the cutting device (20) in a direction parallel to the longitudinal direction of movement of the parallel conveyors (13, 14).

2. An apparatus for carrying out the process of claim 1 comprising a pair of adjacent parallel conveyors (13, 14) suitable for transporting a meat or fish material (11) lying partly on each conveyor, a plurality of weighing machines positioned successively, a control device and a fixed or movable cutting device (20) wherein the parallel conveyors (13, 14) are adapted to travel in the same direction at substantially the same speed and that at least part of one of the parallel conveyors is adapted to form the load-bearing platforms (15, 16, 17, 18) of the weighing machines, each succeeding weighing machine being offset laterally to a degree corresponding to the desired length of the portions of the material (11) which lie on the load-bearing platform and being preprogrammed for a certain weight according to the said desired length, and adapted to weigh the material (11) lying on the load-bearing platform, the cutting device (20) being positioned downstream of the downstream weighing machine (18), and when movable being adapted to move transversely to the direction of movement of the conveyors (13, 14) and when fixed there being provided means, positioned between the downstream weighing machine (18) and the cutting device (20), for causing the material (11) to move transversely relative to the longitudinal direction of movement, the direction and distance of the transverse movement of the cutting device (20) or the means for causing the material (11) to move transversely being controlled by the actual weight recorded compared with the preprogrammed weight with respect to a particular weighing machine, the cutting device (20) being adapted to cut the material (11) parallel to the longitudinal direction of movement of the conveyors (13, 14).

3. An apparatus according to claim 2 wherein the parallel conveyor (14) adapted to form the load-bearing platforms of the weighing machines comprises a plurality or endless belts (15, 16, 17,18) which are offset laterally.

4. An apparatus according to claim 2 wherein the means for causing the material to move transversely relative to the longitudinal direction of movement is a conveyor adapted to travel longitudinally and also adapted to move transversely relative to the longitudinal direction of movement.

5. An apparatus according to claim 2 wherein the weighing machine which records the weight of the material (11) feeds a signal to a control device which actuates a means (24, 25, 26, 27) for separating the cut pieces in size groups.

6. An apparatus according to claim 2 wherein there are from 3 to 6 offset weighing machines (15, 16, 17,18).

**Patentansprüche**

1. Verfahren zum automatischen Schneiden eines Fleisch- oder Fischmaterials (11) mit einer feststehenden oder beweglichen Schneidvorrichtung (20) zur Herstellung von Portionen mit vorgegebenem Gewicht und vorgegebener Länge, das umfaßt das Aufgeben eines Fleisch- oder Fischmaterials (11) auf das Zuführungsende (10) eines Paares von benachbarten parallelen Förderern (13, 14), die sich im wesentlichen mit der gleichen Geschwindigkeit in die gleiche Richtung bewegen, und zwar so, daß das Material teilweise auf jedem der Förderer aufliegt, wobei wenigstens ein Teil eines Förderers (14) so ausgebildet ist, daß er die Wägebrücken (15, 16, 17, 18) einer Vielzahl von hintereinander angeordneten Wägemaschinen bildet, wobei jede der aufeinanderfolgenden Wägemaschinen seitlich um ein solches Stück versetzt ist, das der gewünschten Länge der Portionen des Materials (11) entspricht, die auf der Wägebrücke liegen, und im Einklang mit der genannten gewünschten Länge für ein bestimmtes Gewicht vorprogrammiert ist, wobei die Schneidvorrichtung (20) stromab hinter der stromab letzten Wägemaschine (18) angeordnet ist, wobei die Wägemaschinen das Gewicht des Materials (11), das sich auf der Wägebrücke vorwärtsbewegt, aufzeichnen und wobei die aufgezeichnete Gewichtsmessung einer Steuervorrichtung (20), wenn diese beweglich ist, so in Betrieb setzt, daß sie sich quer zur Richtung der Bewegung des Förderers bewegt, oder dann, wenn die Schneidvorrichtung (20) feststeht, eine Einrichtung, die stromab hinter der Wägemaschine (18) angeordnet ist, so in Betrieb setzt, daß das Material (11) in Querrichtung bezüglich der Längs-Bewegungsrichtung der parallelen Förderer (13, 14) bewegt wird, wobei die Richtung und der Weg der Querbewegung der Schneidvorrichtung (20) oder der Einrichtung zur Erzeugung einer Querbewegung des Materials (11) durch das aufgezeichnete Gewicht, das mit dem vorprogrammierten Gewicht bezüglich einer speziellen Wägemaschine verglichen wird, gesteuert werden, wonach das Material (11) durch die Schneidvorrichtung (20) in einer Richtung parallel zur Längs-Bewegungsrichtung der parallelen Förderer (13, 14) geschnitten wird.

2. Vorrichtung zur Durchführung des Verfahrens von Anspruch 1 mit einem Paar von benachbarten parallelen Förderern (13, 14), die für den Transport eines Fleisch- oder Fischmaterials (11), das teilweise auf jedem der Förderer aufliegt, geeignet sind, einer Vielzahl von Wägemaschinen, die hintereinander angeordnet sind, einer Steuervorrichtung und einer feststehenden oder beweglichen Schneidvorrichtung (20), worin die parallelen Förderer (13, 14) so ausgebildet sind, daß sie sich mit im wesentlichen der gleichen Geschwindigkeit in die gleiche Richtung bewegen und daß wenigstens ein Teil eines der parallelen Förderer so ausgebildet ist, daß er die Wägebrücken (15, 16, 17, 18) der Wägemaschinen bildet, wobei jede nachfolgende Wägemaschine in seitlicher Richtung um ein solches Stück versetzt ist, das der gewünschten Länge der Portionen des Materials (11) entspricht, die auf der Wägebrücke liegen, und für ein der genannten gewünschten Länge entsprechendes bestimmtes Gewicht vorprogrammiert ist und für das Wägen des Materials ausgebildet ist, das auf der Wägebrücke liegt, wobei die Schneidvorrichtung (20) stromab der stromab letzten Wägemaschine (18) angeordnet ist und dann, wenn sie beweglich ist, so ausgebildet ist, daß sie sich quer zur Bewegungsrichtung der Förderer (13, 14) bewegen kann und dann, wenn sie feststeht, eine Einrichtung vorgesehen ist, die zwischen der stromab letzten Wägemaschine (18) und der Schneidvorrichtung (20) angeordnet ist und das Material (11) in Querrichtung bezüglich der Längs-Bewegungsrichtung bewegt, wobei die Richtung und der Weg der Querbewegung der Schneidvorrichtung (20) oder der Einrichtung zur Erzeugung einer Querbewegung des Materials (11) durch das tatsächliche aufgezeichnete Gewicht, das mit dem vorprogrammierten Gewicht bezüglich einer speziellen Wägemaschine verglichen wird, gesteuert wird, wobei die Schneidvorrichtung (20) so ausgebildet ist, daß sie das Material (11) parallel zur Längs-Bewegungsrichtung der Förderer (13, 14) schneidet.

3. Vorrichtung nach Anspruch 2, worin der parallele Förderer (14), der so ausgebildet ist, daß er die Wägebrücken der Wägemaschinen bildet, eine Vielzahl von endlosen Bändern (15, 16, 17, 18) aufweist, die in seitlicher Richtung gegeneinander versetzt sind.

4. Vorrichtung nach Anspruch 2, worin die Einrichtung zur Erzeugung einer Bewegung des Materials quer zur Längs-Bewegungsrichtung ein Förderer ist, der so ausgebildet ist, daß er in Längsrichtung läuft und gleichzeitig so ausgebildet ist, daß er sich quer zur Längs-Bewegungsrichtung bewegen kann.

5. Vorrichtung nach Anspruch 2, worin die Wägemaschine, die das Gewicht des Materials (11) aufzeichnet, ein Signal an die Steuervorrichtung sendet, das eine Einrichtung (24, 25, 26, 27) zur Aufteilung der geschnittenen Stücke in Größengruppen betätigt.

6. Vorrichtung nach Anspruch 2, bei der von 3 bis 6 gegeneinander versetzte Wägemaschinen (15, 16, 17, 18) vorhanden sind.

**Revendications**

1. Procédé pour la coupe automatique de viande ou de poisson (11) par un dispositif de coupe fixe ou mobile (20) afin de produire des portions d'un poids et d'une longueur prédéterminés, qui consiste à placer de la viande ou du poisson (11) sur l'extrémité (10) de chargement de deux transporteurs parallèles adjacents (13, 14) se déplaçant dans la même direction, sensiblement à la même vitesse, afin que la matière s'étende en partie sur chaque transporteur, au moins une partie d'un transporteur (14) étant conçue pour former les plates-formes de charge (15, 16, 17, 18) de plusieurs machines de pesage disposées les unes à la suite des autres, chacune des machines de pesage successives étant décalée latéralement d'un degré correspondant à la longueur souhaitée des portions de la matière (11) qui s'étendent sur la plate-forme de charge et étant préprogrammée pour un certain poids en fonction de ladite longueur souhaitée, le dispositif de coupe (20) étant placé en aval de la machine de pesage d'aval (18), les machines de pesage enregistrent le poids de la matière (11) avançant sur la plate-forme de charge, la mesure de poids enregistrée est transmise à un dispositif de commande qui actionne soit le dispositif de coupe (20), lorsqu'il est mobile, pour le déplacer transversalement à la direction du mouvement du transporteur, soit, lorsque le dispositif de coupe (20) est fixe, un moyen placé en aval de la machine (18) de pesage pour amener la matière (11) à se déplacer transversalement par rapport à la direction longitudinale du mouvement des transporteurs parallèles (13, 14), la direction et la distance du mouvement transversal du dispositif de coupe (20) ou du moyen destiné à amener la matière (11) à se déplacer transversalement étant commandées par le poids enregistré, comparé au poids préprogrammé par rapport à une machine de pesage particulière, après quoi la matière (11) est coupée par le dispositif de coupe (20) dans une direction parallèle à la direction longitudinale du mouvement des transporteurs parallèles (13, 14).

2. Appareil pour la mise en œuvre du procédé de la revendication 1, comprenant deux transporteurs parallèles adjacents (13, 14) aptes à transporter de la viande ou du poisson (11) s'étendant en partie sur chaque transporteur, plusieurs machines de pesage disposées les unes à la suite des autres, un dispositif de commande et un dispositif fixe ou mobile (20) de coupe, appareil dans lequel les transporteurs parallèles (13, 14) sont conçus pour se déplacer dans la même direction, sensiblement à la même vitesse, et au moins une partie de l'un des transporteurs parallèles est conçue pour former les plates-formes de charge (15, 16, 17, 18) des machines de pesage, chacune des machines de pesage successives étant décalée latéralement d'un degré correspondant à la longueur souhaitée des portions de matière (11) qui s'étendent sur la plate-forme de charge et étant préprogrammée pour un certain poids en fonction de ladite longueur souhaitée, et conçue pour peser la matière (11) s'étendant sur la plate-forme de charge, le dispositif de coupe (20) étant placé en aval de la machine de pesage d'aval (18) et, lorsqu'il est mobile, étant conçu pour se déplacer transversalement à la direction du mouvement des transporteurs (13, 14) et, lorsqu'il est fixe, étant muni de moyens, placés entre la machine de pesage d'aval (18) et le dispositif de coupe (20), pour amener la matière (11) à se déplacer transversalement par rapport à la direction longitudinale du mouvement, la direction et la distance du mouvement transversal du dispositif de coupe (20) ou des moyens amenant la matière (11) à se déplacer transversalement étant commandées par le poids réel enregistré, comparé au poids préprogrammé par rapport à une machine de pesage particulière, le dispositif de coupe (20) étant conçu pour couper la matière (11) parallèlement à la direction longitudinale du mouvement des transporteurs (13, 14).

3. Appareil selon la revendication 2, dans lequel le transporteur (14) conçu pour former les plates-formes de charge des machines de pesage comprend plusieurs bandes sans fin (15, 16, 17, 18) qui sont décalées latéralement.

4. Appareil selon la revendication 2, dans lequel les moyens destinés à amener la matière à se déplacer transversalement par rapport à la direction longitudinale du mouvement comprennent un transporteur conçu pour se déplacer longitudinalement et également conçu pour se déplacer transversalement par rapport à la direction longitudinale du mouvement.

5. Appareil selon la revendication 2, dans lequel la machine de pesage qui enregistre le poids de la matière (11) transmet un signal à un dispositif de commande qui actionne un moyen (24, 25, 26, 27) destiné à séparer les morceaux coupés en groupes de tailles.

6. Appareil selon la revendication 2, dans lequel il y a trois à six machines de pesage décalées (15, 16, 17, 18).

FIG.1.

FIG.2.

EP 0 287 688 B1